# EUROPÄISCHE PATENTSCHRIFT

(11) **EP 2 861 440 B1**
(45) Veröffentlichungstag und Bekanntmachung des Hinweises auf die Patenterteilung: **13.07.2016**
(21) Anmeldenummer: 13726681.3
(22) Anmeldetag: 24.05.2013
(51) Int. Cl.: B60G 21/055, B60G 17/02

(54) **VERSTELLBARE RADAUFHÄNGUNG FÜR DIE RÄDER EINER ACHSE EINES KRAFTFAHRZEUGS**
ADJUSTABLE WHEEL SUSPENSION FOR THE WHEELS OF AN AXLE OF A MOTOR VEHICLE
SUSPENSION RÉGLABLE POUR LES ROUES D'UN ESSIEU D'UN VÉHICULE À MOTEUR

(30) Priorität: 15.06.2012 DE 102012011918
(43) Veröffentlichungstag der Anmeldung: 22.04.2015
(73) Patentinhaber: Audi AG, 85045 Ingolstadt (DE)
(72) Erfinder: SCHINDLER, Andreas, 85055 Ingolstadt (DE); BERINGER, Heinrich, 85095 Denkendorf (DE); GOLDBERG, Ruben, 85049 Ingolstadt (DE); ISAKIEWITSCH, Christian, 85051 Ingolstadt (DE); SCHMITT, Joachim, 85051 Ingolstadt (DE)
(74) Vertreter: Reichert, Thomas Klaus
(86) Internationale Anmeldenummer: PCT/EP2013/001533
(87) Internationale Veröffentlichungsnummer: WO 2013/185879

(56) Entgegenhaltungen:
- EP-A1- 0 779 204
- EP-A1- 2 517 905
- EP-A2- 1 321 351
- DE-A1-102006 001 709
- DE-A1-102007 024 770
- DE-A1-102009 005 895

## Beschreibung

Die Erfindung betrifft eine verstellbare Radaufhängung für die Räder einer Achse eines Kraftfahrzeugs gemäß der im Oberbegriff des Patentanspruches 1 angegebenen Art. Eine solche Radaufhängung ist in DE 102009 00 5895 offenbart.

Sogenannte aktive Systeme zur Aufbauberuhigung eines Kraftfahrzeugs sind hinreichend bekannt. In der Regel werden hierzu Stellvorrichtungen zur Verdrehung eines Drehstabes verwendet. Durch das Aufbringen eines Moments auf den Drehstab werden aktive Kräfte gestellt, die die Wankbewegung oder die Aufbaubewegung des Kraftfahrzeugs beeinflussen können.

So offenbaren z.B. die DE 101 26 928 A1, DE 10 2004 002 550 A1 oder die DE 102 42 552 B4 entsprechende Anordnungen von zweigeteilten Stabilisatoren mit einer Stellvorrichtung zum Beeinflussen der Federraten und der Fahreigenschaften von Kraftfahrzeugen. Dabei kann durch gegensinniges Verstellen der geteilten Drehstäbe des insgesamt u-förmigen Stabilisators das Wankverhalten bzw. die Kurvenneigung des Kraftfahrzeugs verringert oder durch gleichsinniges Verstellen der Nickbewegung z. B. beim Bremsen entgegen gewirkt werden.

Eine gattungsgemäße verstellbare Radaufhängung für die Räder eines Kraftfahrzeugs ist in der DE 10 2009 005 898 A1 beschrieben. Hierbei ist jedes Rad der Achse über mehrere Radführungselemente an einem Hilfsrahmen gelagert und steht über seine Radführungselemente mit einem verstellbaren Drehstab in Wirkverbindung. Jedem Drehstab ist eine Stellvorrichtung zugeordnet, über den Momente auf den Drehstab aufbringbar sind, d.h. aktive Kräfte gestellt werden können, um z.B. eine Walkbewegung entgegen zu wirken. Die für die Verstellung der Drehstäbe notwendigen Stellvorrichtungen sind unmittelbar am Hilfsrahmen befestigt. Als nachteilig erweist sich hierbei, dass aufgrund der unmittelbaren Befestigung der Stellvorrichtungen am Hilfsrahmen dieser entsprechend verstärkt und damit massiver auszubilden ist, um eine Aufnahme der wirkenden Kräfte und Momente zu gewährleisten. Dies bedingt neben einem höheren Gewicht auch höhere Herstellungskosten.

Eine gattungsgemäße, sämtliche Merkmale des Oberbegriffs des Patentanspruches 1 aufweisende, verstellbare Radaufhängung für die Räder einer Achse eines Kraftfahrzeugs, ist in der nachveröffentlichten Druckschrift DE 10 2011 018 574 A1 offenbart.

Der Erfindung liegt die Aufgabe zugrunde, eine verstellbare Radaufhängung für die Räder einer Achse eines Kraftfahrzeugs gemäß der im Oberbegriff des Patentanspruches 1 angegebenen Art derart weiterzubilden, dass der Hilfsrahmen ein geringeres Bauteilgewicht aufweist und kostengünstiger herstellbar ist.

Diese Aufgabe wird durch die kennzeichnenden Merkmale des Patentanspruches 1 in Verbindung mit seinen Oberbegriffsmerkmalen gelöst.

Die Unteransprüche bilden vorteilhafte Weiterbildungen der Erfindung.

In bekannter Art und Weise ist jedes Rad der verstellbaren Radaufhängung über mehrere Rädführungselemente geführt und jedes Rad der Achse steht über seine Radführungselemente mit einem verstellbaren Drehstab in Wirkverbindung. Zudem sind die den jeweiligen Rädern zugeordneten Drehstäbe bereichsweise fluchtend zueinander angeordnet und in Fahrzeugquerrichtung ausgerichtet. Zur Verstellung ist jedem Drehstab eine Stellvorrichtung zugeordnet. Über die jeweilige Stellvorrichtung sind die Drehstäbe an einem karosseriefesten Hilfsrahmen befestigt. Zudem sind die beiden Stellvorrichtungen bzw. die Gehäuse der Stellvorrichtungen über eine Gehäusestrebe miteinander verbunden. Die Gehäusestrebe nimmt die wirkenden Kräfte und Biegemomente auf. Dies hat den Effekt, dass über die Schnittstelle Stellvorrichtung - Hilfsrahmen geringere Kräfte bzw. Momente zu übertragen sind. D.h. der Hilfsrahmen kann in diesen Bereich leichter ausgebildet werden, was wiederum eine kostengünstigere Fertigung ermöglicht. Zudem kann durch die querstützende Wirkung der Gehäusestrebe auf jeweils einen Anbindungspunkt gegenüber der nach dem Stand der Technik sonst üblichen 3-Punktelagerung verzichtet werden kann.

Erfindungsgemäß ist die in Fahrzeugquerrichtung ausgerichtete Gehäusestrebe derart dimensioniert, dass der Hilfsrahmen unter Wegfall einer Querstrebe ausbildbar ist. Durch die erfindungsgemäße Ausgestaltung und Dimensionierung der Gehäusestrebe ist nun sichergestellt, dass die Gehäusestrebe zusätzlich die Funktion einer Hilfsrahmenquerstrebe übernimmt. Da nunmehr der Hilfsrahmen unter Verzicht auf die in Fahrzeuglängsrichtung betrachtet vordere Querstrebe ausgebildet werden kann, ist eine deutlich leichtere Hilfsrahmenkonstruktion ermöglicht.

Gemäß einer besonders vorteilhaften Ausführungsform der Erfindung ist die Gehäusestrebe als ein geschlossenes Profil ausgebildet. Die Ausgestaltung der Gehäusestrebe als ein geschlossenes Profil erweist sich als besonders vorteilhaft, da diese Bauform hohe Steifigkeiten, insbesondere Biegesteifigkeiten, bei geringem Materialeinsatz ermöglicht. Kräfte aus dem Stellvorgang werden so ohne größere Hebelwirkungen direkt in die Struktur abgeleitet. Zudem übernimmt die als geschlossenes Profil ausgebildete Gehäusestrebe Schutzfunktionen für Drehstäbe und Stellereinheit.

In Bezug auf das geschlossene Profil sind verschiedene Ausführungsformen denkbar. Vorzugweise weist das geschlossene Profil einen Kreis-, Rechteck- oder Dreiecksquerschnitt auf.

Gemäß einer weiteren besonders vorteilhaften Ausbildung der Erfindung sind an der Gehäusestrebe mehrere, jeweils eine horizontal ausgerichtete Bohrung aufweisende Anformungen ausgebildet. Entsprechend ist der Hilfsrahmen mit hierzu korrespondierend horizontal ausgerichteten Bohrungen versehen, so dass die Gehäusestrebe über eine horizontal ausgerichtete Verschraubung am Hilfsrahmen befestigbar ist. Die horizontale Verschraubung erweist sich im Hinblick auf den geringeren Bauraumbedarf als besonders vorteilhaft. der Hilfsrahmen mit hierzu korrespondierend horizontal ausgerichteten Bohrungen versehen, so dass die Gehäusestrebe über eine horizontal ausgerichtete Verschraubung am Hilfsrahmen befestigbar ist. Die horizontale Verschraubung erweist sich im Hinblick auf den geringeren Bauraumbedarf als besonders vorteilhaft.

Weitere Vorteile, Merkmale und Anwendungsmöglichkeiten der vorliegenden Erfindung ergeben sich aus der nachfolgenden Beschreibung in Verbindung mit dem in der Zeichnung dargestellten Ausführungsbeispiel.

In der Beschreibung, in den Ansprüchen und in der Zeichnung werden die in der unten aufgeführten Liste der Bezugszeichen verwendeten Begriffe und zugeordneten Bezugszeichen verwendet.

In der Zeichnung bedeutet:
- Fig. 1: eine verstellbare Radaufhängung für die Räder einer Achse eines Kraftfahrzeugs gemäß dem Stand der Technik, und

- Fig. 2: eine erfindungsgemäße verstellbare Radaufhängung.

In der nachfolgenden Beschreibung und in den Figuren werden zur Vermeidung von Wiederholungen gleiche Bauteile und Komponenten mit gleichen Bezugszeichen gekennzeichnet, sofern keine weitere Differenzierung erforderlich oder sinnvoll ist.

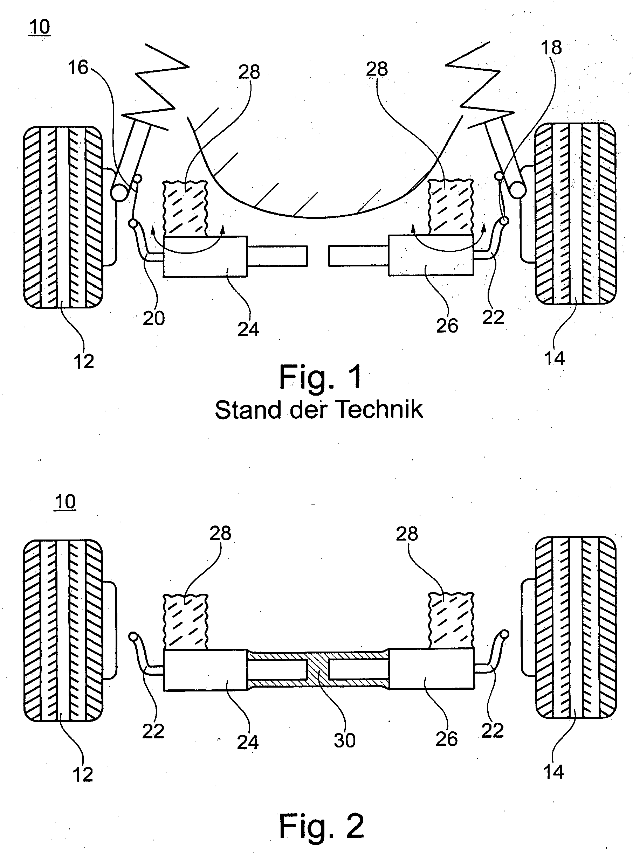

Fig. 1 zeigt eine insgesamt mit dem Bezugszeichen 10 bezeichnete verstellbare Radaufhängung für die Räder 12, 14 einer Achse eines Kraftfahrzeugs.

Wie Fig. 1 zu entnehmen ist, steht jedes Rad 12, 14 über ein Radführungselement 16, 18 mit einem Drehstab 20, 22 in Wirkverbindung. Auf eine Darstellung weiterer Radführungselemente wurde auf Gründen der Übersichtlichkeit verzichtet. Die beiden Drehstäbe 20, 22 sind bereichsweise fluchtend zueinander, in Fahrzeugquerrichtung FQ ausgerichtet.

Jedem Drehstab 16, 18 ist ein Stellvorrichtung 24, 26 zugeordnet. Über die Stellvorrichtung 24 bzw. 26 werden die für die für die Verstellung der Drehstäbe 16, 18 notwendigen Momente gestellt.

Die Stellvorrichtungen 24, 26 sind unmittelbar an einen, hier lediglich schematisch dargestellten, Hilfsrahmen 28 befestigt. Um die entstehenden Kräfte und Momente aufnehmen zu können, muss der Hilfsrahmen 28 in diesem Bereich verstärkt ausgebildet sein. Dies erhöht Gewicht und Kosten.

Hier setzt nun die Erfindung ein:
Wie Fig. 2 zeigt, ist bei der erfindungsgemäßen Radaufhängung 10 zwischen den Stellvorrichtungen 24, 26 eine Gehäusestrebe 30 angeordnet.

Die Gehäusestrebe 30 verbindet die Gehäuse der Stellvorrichtungen 24, 26. Die Gehäusestrebe 30 nimmt die wirkenden Kräfte und Momente auf, d.h. die an der Schnittstelle Stellvorrichtung 24 bzw. 26 und Hilfsrahmen 28 wirkenden Kräfte und Momente sind stark reduziert.

Als Folge daraus ist die nach dem Stand der Technik erforderliche verstärkte Ausbildung des Hilfsrahmens in diesem Bereich nicht mehr erforderlich, so dass eine leichtere Ausbildung des Hilfsrahmens ermöglicht ist.

Wie Fig. 2 weiterhin zu entnehmen ist, sind die fluchtenden Bereiche der Drehstäbe 20, 22 und damit auch die Gehäusestrebe 30 in Fahrzeugquerrichtung FQ ausgerichtet. Die Ausbildung und Dimensionierung der Gehäusestrebe 30 ist dabei derart gewählt, dass die Gehäusestrebe 30 zusätzlich auch die Funktion einer normalerweise notwendigen Hilfsrahmenquerstrebe übernimmt. Als Folge daraus ist der Hilfsrahmen 30 unter Verzicht einer vorderen Hilfsrahmenquerstrebe ausgebildet, was eine zusätzliche Gewichtsreduzierung bedingt.

### Bezugszeichenliste

- 10: Radaufhängung
- 12: Rad
- 14: Rad
- 16: Radführungselement
- 18: Radführungselement
- 20: Drehstab
- 22: Drehstab
- 24: Stellvorrichtung
- 26: Stellvorrichtung
- 28: Hilfsrahmen
- 30: Gehäusestrebe

## Patentansprüche

1. Verstellbare Radaufhängung (10) für die Räder (12, 14) einer Achse eines Kraftfahrzeugs, bei der jedes Rad (12, 14) über Radführungselemente (16, 18) geführt ist und jedes Rad (12, 14) über .seine Radführungselemente (16, 18) mit einem über eine Stellvorrichtung (24, 26) verstellbaren Drehstab (20, 22) in Wirkverbindung steht, wobei die Drehstäbe (20, 22) bereichsweise fluchtend zueinander angeordnet und in Fahrzeugquerrichtung (FQ) ausgerichtet sind und jeweils über ihre zugeordnete Stellvorrichtung (24, 26) an einem Hilfsrahmen (28) gelagert sind, wobei die beiden Stellvorrichtungen (24, 26) über eine Gehäusestrebe (30) miteinander verbunden sind, **dadurch gekennzeichnet, dass** die Gehäusestrebe (30) derart ausgebildet und dimensioniert ist, dass der Hilfsrahmen (28) unter Wegfall einer Querstrebe ausbildbar ist.

2. Verstellbare Radaufhängung (10) nach Anspruch 1, **dadurch gekennzeichnet, dass** die Gehäusestrebe (30) als ein geschlossenes Profil ausgebildet ist.

3. Verstellbare Radaufhängung (10) nach Anspruch 2, **dadurch gekennzeichnet, dass** das geschlossenes Profil einen Kreis-, Rechteck- oder Dreiecksquerschnitt aufweist.

4. Verstellbare Radaufhängung (10) nach einem der vorangegangenen Patentansprüche, **dadurch gekennzeichnet, dass** an der Gehäusestrebe (30) mehrere, jeweils eine horizontal ausgerichtete Bohrung aufweisende Anformungen ausgebildet sind, und der Hilfsrahmen (28) hierzu korrespondierend horizontal ausgerichtete Bohrungen aufweist und dass die Gehäusestrebe (30) über eine horizontal ausgerichtete Verschraubung am Hilfsrahmen (28) befestigt ist.

## Claims

1. An adjustable wheel suspension (10) for the wheels (12, 14) of an axle of a motor vehicle, wherein each wheel (12, 14) is guided over wheel guiding members (16, 18) and each wheel (12, 14) is in operative connection via its wheel guiding members (16, 18) with a torsion bar (20, 22) that is adjustable via an actuator device (24, 26), wherein said torsion bars (20, 22) are arranged to be aligned to each other in sections and are orientated in the transverse direction (FQ) of the vehicle and are each supported on an auxiliary frame (28) via their respective associated actuator device (24, 26), wherein the two actuator devices (24, 26) are connected to each other via a housing strut (30), **characterised in that** the housing strut (30) is formed and dimensioned such that the auxiliary frame (28) can be formed without using a transverse strut.

2. The adjustable wheel suspension (10) as claimed in claim 1, **characterised in that** the housing strut (30) is formed as a closed profile.

3. The adjustable wheel suspension (10) as claimed in claim 2, **characterised in that** the closed profile has a circular, rectangular or triangular cross section.

4. The adjustable wheel suspension (10) as claimed in any one of the preceding patent claims, **characterised in that** on the housing strut (30), a plurality of mouldings each having a horizontally aligned bore are formed, and the auxiliary frame (28) has bores horizontally orientated in correspondence therewith, and **in that** the housing strut (30) is fastened to the auxiliary frame (28) via a horizontally orientated screw connection.

## Revendications

1. Suspension de roue réglable (10) pour les roues (12, 14) d'un essieu d'un véhicule automobile, telle que chaque roue (12, 14) est guidée par l'intermédiaire d'éléments de guidage de roue (16, 18) et chaque roue (12, 14) est en liaison active par l'intermédiaire de ses éléments de guidage de roue (16, 18) avec une barre de torsion (20, 22) réglable par l'intermédiaire d'un dispositif de positionnement (24, 26), les barres de torsion (20, 22) étant agencées alignées par endroits l'une par rapport à l'autre et étant orientées dans la direction transversale de véhicule (FQ) et étant montées à chaque fois par l'intermédiaire de leur dispositif de positionnement respectif (24, 26) sur un faux-châssis (28), les deux dispositifs de positionnement (24, 26) étant reliés ensemble par l'intermédiaire d'une entretoise de caisse (30), **caractérisée en ce que** l'entretoise de caisse (30) est conçue et dimensionnée de telle sorte que le faux-châssis (28) peut être conçu en supprimant une entretoise transversale.

2. Suspension de roue réglable (10) selon la revendication 1, **caractérisée en ce que** l'entretoise de caisse (30) est conçue comme un profilé fermé.

3. Suspension de roue réglable (10) selon la revendication 2, **caractérisée en ce que** le profilé fermé a une section transversale en forme de cercle, de rectangle ou de triangle.

4. Suspension de roue réglable (10) selon l'une des revendications précédentes, **caractérisée en ce que** plusieurs éléments moulés comportant chacun un trou orienté horizontalement sont conçus sur l'entretoise de caisse (30) et le faux-châssis (28) comporte des trous orientés horizontalement correspondant aux précédents et **en ce que** l'entretoise de caisse (30) est fixée au faux-châssis (28) par l'intermédiaire d'un assemblage vissé orienté horizontalement.
